# EUROPEAN PATENT APPLICATION

(11) **EP 1 721 919 A1**
(43) Date of publication of application: **15.11.2006**
(21) Application number: 05103827.1
(22) Date of filing: 09.05.2005
(51) Int. Cl.: C08G 18/09, C08G 18/79, C08G 18/76, C08J 9/14

(54) **Process for making rigid urethane-modified polyisocyanurate foams**

(71) Applicant: HUNTSMAN INTERNATIONAL LLC, Salt Lake City, Utah 84108 (US)
(72) Inventor: Kuester, Joern Matthias, 21100 Varese (VA) (IT)
(74) Representative: Swinnen, Anne-Marie

(57) **Abstract**

Process for preparing rigid urethane-modified polyisocyanurate foams at an isocyanate index of 300 to 600% from polyisocyanates and polyfunctional isocyanate-reactive components in the presence of a hydrocarbon or hydrofluorocarbon blowing agent and trans-1,2-dichloroethylene.

## Description

This invention relates to processes for the preparation of rigid urethane-modified polyisocyanurate foams, to foams prepared thereby and to compositions useful in said processes.

Rigid urethane-modified polyisocyanurate (PIR) foams are in general prepared by reacting a stoichiometric excess of polyisocyanate with isocyanate-reactive compounds (usually a polyol) in the presence of a blowing agent, surfactants and catalysts.

Rigid PIR foams, because of their unusually good thermal insulation properties, find application in the fabrication of structural components for the building industry.
For instance, sandwich panels, manufactured in a continuous process, can be made by bonding steel, aluminium or foil stressed skin materials to polyisocyanurate foam insulating cores.

Urethane-modified polyisocyanurate foams exhibit better fire retardancy, reduced smoke emission in fire situations and greater thermal stability than polyurethane foams in general, due to the presence of the isocyanurate groups.

Higher index PIR foams are increasingly desirable in construction applications due to more stringent fire regulations and the need for low smoke systems.
However PIR foams with high index (above 300) tend to be friable and even at high laminator temperature show relatively poor initial (so-called green) adhesion. The adhesion even drops in the first hours often leading to delamination problems.

The present invention allows to increase the foam index of PIR foams resulting in better fire properties, yet overcoming the problem of green and final adhesion with reduced laminator temperature.

The present invention involves a method for making rigid urethane-modified polyisocyanurate foams at an isocyanate index above 200% from polyisocyanates and polyfunctional isocyanate-reactive components in the presence of trans-1,2-dichloroethylene (TDCE).

The reaction of the present invention is carried out an isocyanate index of above 200 %, typically between 200 and 600 %, preferably at an isocyanate index of 300 to 600 %.

The term isocyanate index as used herein is meant to be the molar ratio of NCO-groups over reactive hydrogen atoms present in the foam formulation, given as a percentage.

In terms of "excess isocyanate", which is the weight percentage of isocyanate in the total formulation which is not used for the OH/NCO reaction, this means between 20 and 70 wt%, preferably between 40 and 70 wt%.

Using TDCE in such high index PIR foams substantially improves the adhesion in composite panels containing said PIR foam as insulating core. Very good green adhesion can be obtained at reduced laminator temperature (50-55°C instead of the normal 60°C). Dimensional stability of the foam also remains good (in spite of the plasticizing effect of TDCE).

The TDCE is used in an amount of from 1 to 25 wt% based on the isocyanate-reactive components or 0.1 to 5 wt% based on the total foam formulation.

The rigid urethane-modified polyisocyanurate foam produced according to the process of the present invention generally is closed-celled, i.e. the open cell content is less than 20 %.

Suitable isocyanate-reactive compounds to be used in the process of the present invention include any of those known in the art for the preparation of rigid polyurethane or urethane-modified polyisocyanurate foams. Of particular importance for the preparation of rigid foams are polyols and polyol mixtures having average hydroxyl numbers of from 160 to 1000, especially from 200 to 700 mg KOH/g, and hydroxyl functionalities of from 2 to 8, especially from 2 to 6. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; polyamines, for example ethylene diamine, tolylene diamine (TDA), diaminodiphenylmethane (DADFM) and polymethylene polyphenylene polyamines; and aminoalcohols, for example ethanolamine and diethanolamine; and mixtures of such initiators. Other suitable polymeric polyols include polyesters obtained by the condensation of appropriate proportions of glycols and higher functionality polyols with dicarboxylic or polycarboxylic acids, DMT-scrap or digestion of PET by glycols. Still further suitable polymeric polyols include hydroxyl-terminated polythioethers, polyamides, polyesteramides, polycarbonates, polyacetals, polyolefins and polysiloxanes.

Preferably the isocyanate-reactive composition contains at least 50 wt%, preferably at least 80 wt%, most preferably 100 wt% of polyester polyols, preferably aromatic polyester polyols (i.e. derived from an aromatic carboxylic acid) (amounts calculated on the total isocyanate-reactive components). The other isocyanate-reactive compounds are preferably aromatic polyether polyols e.g. those derived from aromatic polyamines such as DADPM.

Suitable organic polyisocyanates for use in the process of the present invention include any of those known in the art for the preparation of rigid polyurethane or urethane-modified polyisocyanurate foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates, which may be mentioned, include the aliphatic diisocyanates such as isophorone diisocyanate, 1,6-diisocyanatohexane and 4,4'-diisocyanatodicyclohexylmethane.

TDCE can be used alone but preferably it is used together with other blowing agents.

Any of the physical blowing agents known for the production of rigid polyurethane or urethane-modified polyisocyanurate foam can be used in the process of the present invention. Examples of these include liquid carbon dioxide, dialkyl ethers, cycloalkylene ethers and ketones, fluorinated ethers, chlorofluorocarbons, perfluorinated hydrocarbons, hydrochlorofluorocarbons, hydrofluorocarbons and hydrocarbons.

Examples of suitable hydrochlorofluorocarbons include 1-chloro-1,2-difluoroethane, 1-chloro-2,2-difluoroethane, 1-chloro-1,1-difluoroethane, 1,1-dichloro-1-fluoroethane and monochlorodifluoromethane.

Examples of suitable hydrofluorocarbons include 1,1,1,2-tetrafluoroethane (HFC 134a), 1,1,2,2-tetrafluoroethane, trifluoromethane, heptafluoropropane, 1,1,1-trifluoroethane, 1,1,2-trifluoroethane, 1,1,1,2,2-pentafluoropropane, 1,1,1,3-tetrafluoropropane, 1,1,1,3,3-pentafluoropropane (HFC 245fa), 1,1,3,3,3-pentafluoropropane, 1,1,1,3,3-pentafluoro-n-butane (HFC 365mfc), 1,1,1,4,4,4-hexafluoro-n-butane, 1,1,1,2,3,3,3-heptafluoropropane (HFC 227ea) and mixtures of any of the above.

Suitable hydrocarbon blowing agents include lower aliphatic or cyclic, linear or branched hydrocarbons such as alkanes, alkenes and cycloalkanes, preferably having from 4 to 8 carbon atoms. Specific examples include n-butane, iso-butane, 2,3-dimethylbutane, cyclobutane, n-pentane, iso-pentane, technical grade pentane mixtures, cyclopentane, methylcyclopentane, neopentane, n-hexane, iso-hexane, n-heptane, iso-heptane, cyclohexane, methylcyclohexane, 1-pentene, 2-methylbutene, 3-methylbutene, 1-hexene and any mixture of the above. Preferred hydrocarbons are n-butane, iso-butane, cyclopentane, n-pentane and isopentane and any mixture thereof, in particular mixtures of n-pentane and isopentane (preferred weight ratio 3:8), mixtures of cyclopentane and isobutane (preferred weight ratio 8:3), mixtures of cyclopentane and n-butane and mixtures of cyclopentane and iso- or n-pentane (preferred weight ratio between 6:4 and 8:2).

Generally water or other carbon dioxide-evolving compounds are used together with the physical blowing agents. Where water is used as chemical co-blowing agent typical amounts are in the range from 0.2 to 5 %, preferably from 0.3 to 2.5 % by weight based on the isocyanate-reactive compound or 0.04 to 0.6 wt% on total foam.

The total quantity of blowing agent to be used in a reaction system for producing cellular polymeric materials will be readily determined by those skilled in the art, but will typically be from 2 to 25 % by weight based on the total reaction system.

Preferred blowing agents are water and/or hydrocarbons and/or hydrofluorocarbons.

Any compound that catalyses the isocyanate trimerisation reaction can be used as catalyst such as tertiary amines, triazines and most preferably metal salt trimerisation catalysts.

Preferred metal salt trimerisation catalysts are potassium acetate (commercially available as Polycat 46 from Air Products and Catalyst LB from Huntsman Polyurethanes) and, most preferably, potassium 2-ethylhexanoate (commercially available as Dabco K15 from Air Products).

The metal salt trimerisation catalyst is generally used in an amount ranging from 0.5 to 5 % by weight based on the isocyanate-reactive composition, preferably about 1 to 3 %.

In addition to this metal salt trimerisation catalyst other types of trimerisation catalysts and urethane catalysts can be used. Examples of these additional catalysts include dimethylcyclohexylamine, triethylamine, pentamethylenediethylenetriamine, tris (dimethylamino-propyl) hydrotriazine (commercially available as Jeffcat TR 90 from Huntsman Performance Products), dimethylbenzylamine (commercially available as Jeffcat BDMA from Huntsman Performance Products). They are used in amounts ranging from 0.5 to 8 % by weight based on the isocyanate-reactive composition. In general the total amount of trimerisation catalyst is between 0.4 and 4.5 % and the total amount of urethane catalyst ranges from 0.1 to 3.5 % by weight based on the isocyanate-reactive composition.

In addition to the polyisocyanate and polyfunctional isocyanate-reactive compositions, the blowing agents and the catalysts, the foam-forming reaction mixture will commonly contain one or more other auxiliaries or additives conventional to formulations for the production of rigid urethane-modified polyisocyanurate foams. Such optional additives include crosslinking agents, for examples low molecular weight polyols such as triethanolamine, surfactants, fire retardants, for example triethylphosphates and diethylethylphosphonate, and fillers such as carbon black
Functionalised carboxylic acids such as lactic acid, acetic acid, malic acid, maleic acid and salicylic acid can be added as well. Amounts are generally in the range 0.05 to 5 % by weight based on the isocyanate-reactive composition, preferably about 0.1 % to 2 %.

In operating the process for making rigid foams according to the invention, the known one-shot, prepolymer or semi-prepolymer techniques may be used together with conventional mixing methods.

It is convenient in many applications to provide the components for polyurethane production in pre-blended formulations based on each of the primary polyisocyanate and isocyanate-reactive components. In particular, many reaction systems employ a polyisocyanate-reactive composition which contains the major additives such as the blowing agent, the catalyst and the surfactant in addition to the polyisocyanate-reactive component or components.

Therefore the present invention also provides a polyfunctional isocyanate-reactive composition which contains the isocyanate-reactive components, TDCE and optionally other additives such as the catalyst, the blowing agent and surfactants.

According to a particularly preferred embodiment of the present invention the foam prepared using the process of the present invention is used as inner core insulator in sandwich panels provided with facings of metal, gypsum or ceramics on one or both sides.

Such laminated articles having a core of rigid foam can be made continuously or batchwise in a mould or former. The process of continuous lamination usually involves deposition of a foam-forming polymers mixture onto one of two facing sheets and bringing the second sheet into contact with the mixture before it sets and sometimes before it foams.

When the laminated article is to be in the form of a panel it may be produced batchwise in a suitably shaped mould as described above or continuously on any laminating machine suitable for the production of foam panel. Such machines are well known in the art and comprise conveying means for continuously advancing flexible or rigid sheet material, usually in a horizontal plane; a spray device or other distributor for depositing a foam mix evenly over the surface of the sheet material, even distribution being achieved either by employing a spreader, multiple spray devices or by reciprocating the spray device or other distributor transversely across the sheet material; and, if desired, means for bringing a second sheet material into contact with the foam before it has set or possibly before or during foaming. When the foam is formed between two facing sheets, the laminate will normally be transported and allowed to foam between two parallel conveyors, the conveyors being either maintained at a set distance apart or designed to exert a predetermined pressure on the foam. The foam mix may even be deposited on the upper of two sheets which is inverted when the foam mix no longer flows under gravity but is still tacky and brought into contact with the lower sheet.

The various aspects of this invention are illustrated, but not limited by the following examples.

In these examples the following ingredients are used:
Polyol 1: an aromatic PET based polyester polyol.
Polyol 2: an aromatic amine initiated polyether polyol of OH value 310 mg KOH/g.
Fire retardant: a fire retardant package.
Surfactant: a silicone surfactant package.
Catalyst: a trimerisation catalyst package.
Isocyanate: polymeric MDI.

### Example 1

Rigid polyisocyanurate foam panels of varying thickness (expressed in mm) and metal-facing were prepared using a certain laminator temperature (in°C) as indicated in table 1 from the ingredients listed in table 1 below (amounts are indicated as % by weight based on total foam-composition).
The final adhesion of the obtained foam panels (in kPa) after some days was measured according to standard ASTM D 1623.
The green adhesion after 0, 20, 40 minutes and 24 hours was measured by delaminating the metal-facing by hand and visually judging the adhesion as follows: 1 = excellent; 2 = good; 3 = borderline; 4 = delaminates by just touching; 5 = selfdelaminating.
The following physical properties were measured: density (in g/l according to ISO 845, compressive strength (in kPa) according to ISO 844 and dimensional stability (% change) according to ISO 2796.
The results are also listed in table 1.

These results show that better values for green adhesion are obtained with foams according to the invention containing TDCE even at lower laminator temperature.
The final adhesion values for the comparative foams not containing TDCE are below 100 kPa and delamination occurs on the steel whereas for foams according to the invention the foam breaks indicating that the adhesion foam-steel must be higher than the measured value (which is the foam cohesion).

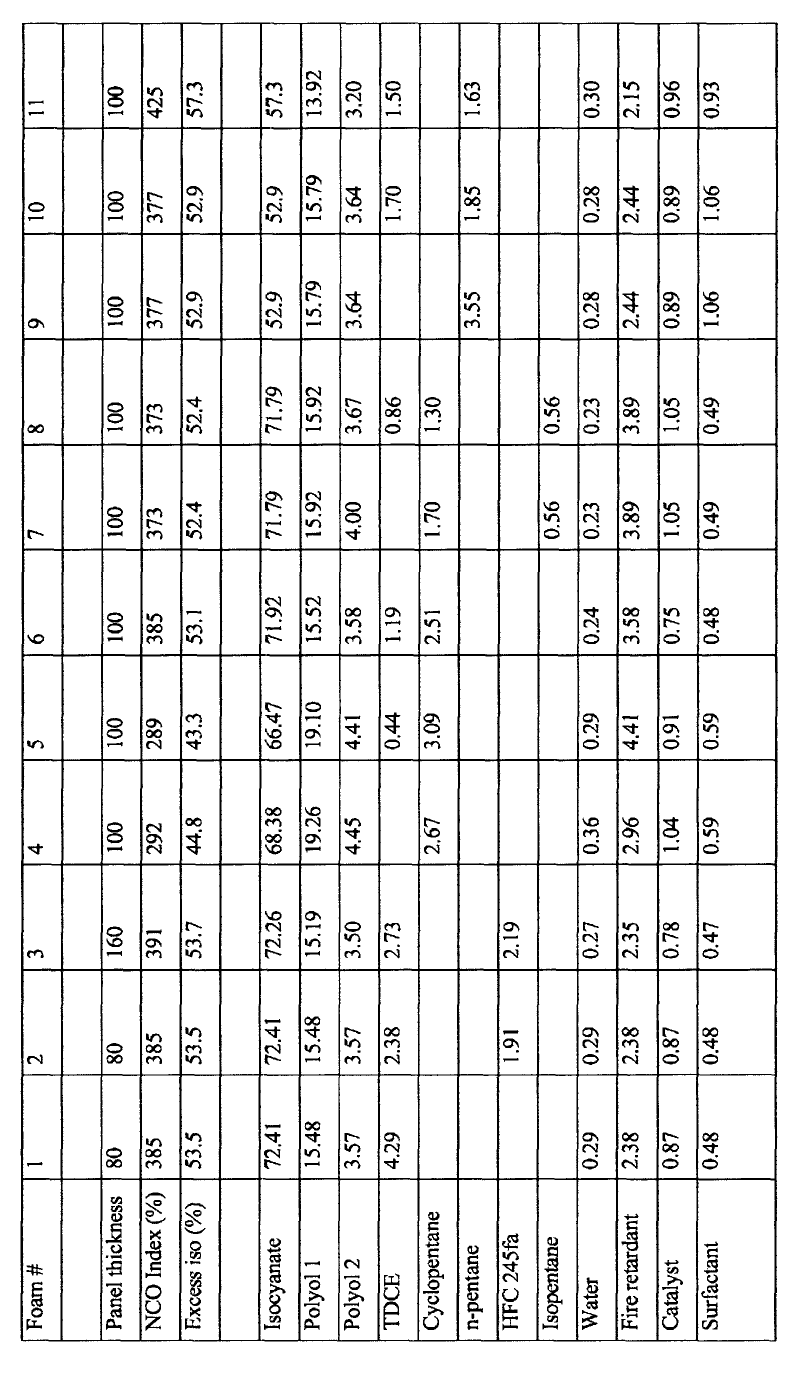

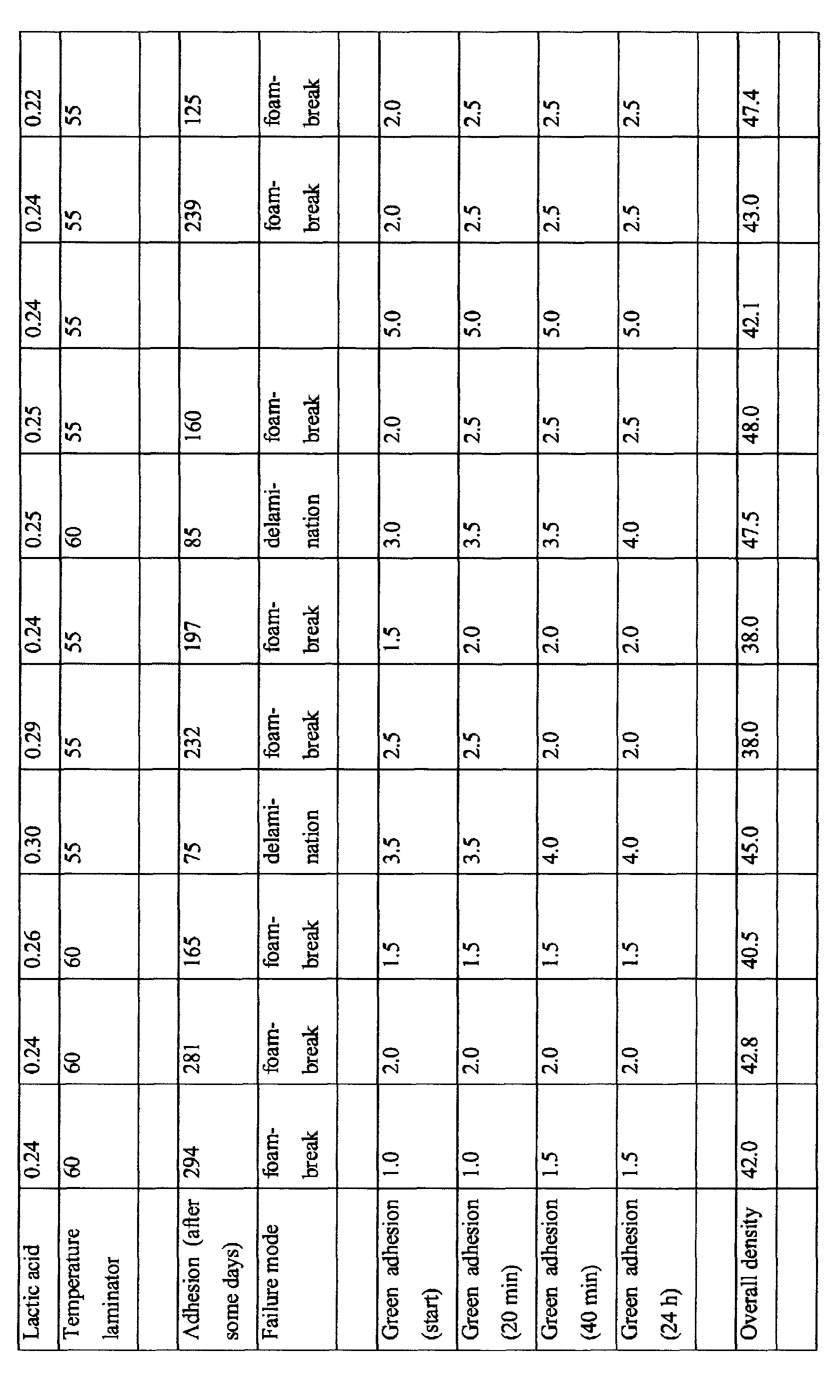

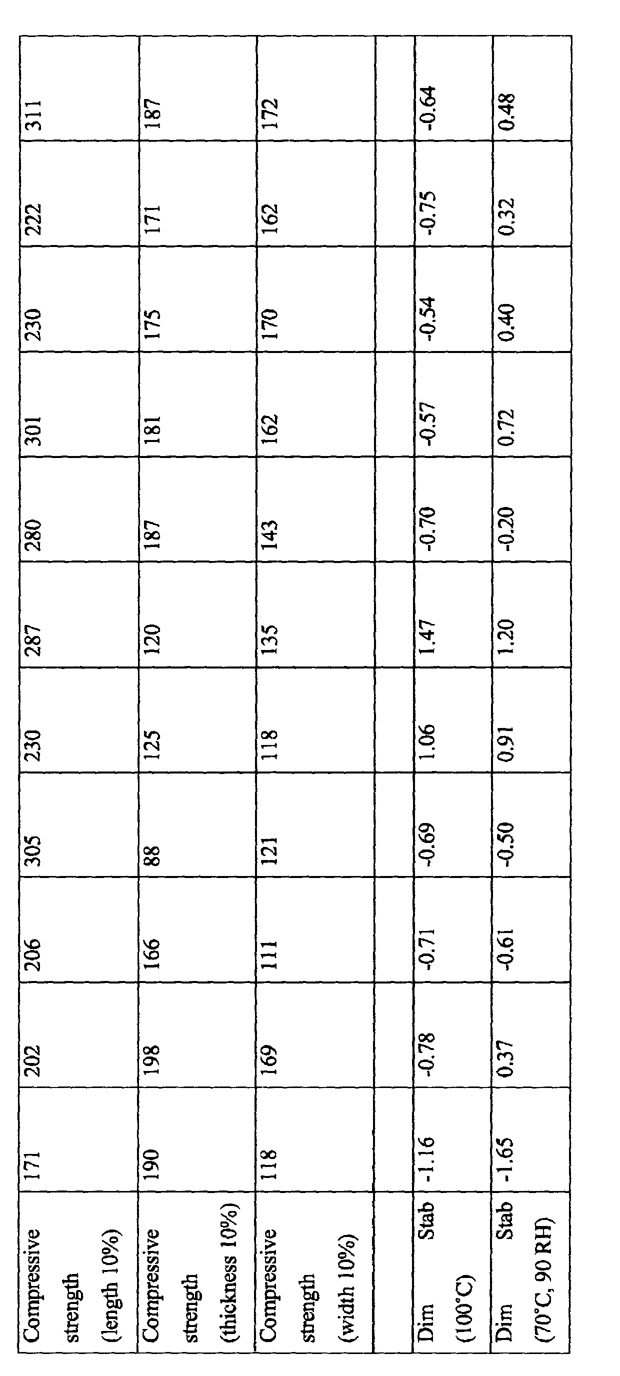

## Claims

1. Process for preparing rigid urethane-modified polyisocyanurate foam comprising the step of reacting an organic polyisocyanate with a polyfunctional isocyanate-reactive component at an isocyanate index of at least 200% in the presence of trans-1,2-dichloroethylene.

2. Process according to claim 1 wherein the reaction is carried out at an isocyanate index of between 200 and 600%.

3. Process according to claim 2 wherein the reaction is carried out at an isocyanate index of between 300 and 600%.

4. Process according to any one of the preceding claims wherein the polyisocyanate is used in an excess of between 20 and 70% by weight.

5. Process according to any one of the preceding claims wherein the amount of trans-1,2-dichloroethylene is between 0.1 and 5 wt% based on the total foam formulation.

6. Process according to any one of the preceding claims wherein the polyfunctional isocyanate-reactive component comprises aromatic polyester polyols and/or aromatic polyether polyols.

7. Process according to any one of the preceding claims wherein the reaction is carried out in the presence of a hydrocarbon or hydrofluorocarbon blowing agent.

8. Rigid urethane-modified polyisocyanurate foam obtainable by the process as defined in any one of the preceding claims.

9. Polyfunctional isocyanate-reactive composition containing trans-1,2-dichloroethylene.

10. Sandwich panel comprising an insulation layer having on at least one side a facing **characterised in that** said insulation layer comprises a foam as defined in claim 8.
